Europäisches Patentamt

European Patent Office

Office européen des brevets

(11) Veröffentlichungsnummer: **0 457 316 A1**

## (12) EUROPÄISCHE PATENTANMELDUNG

(21) Anmeldenummer: **91107934.1**

(22) Anmeldetag: **15.05.91**

(51) Int. Cl.5: **G01B 7/06**

(30) Priorität: **16.05.90 DE 4015692**

(43) Veröffentlichungstag der Anmeldung:
**21.11.91 Patentblatt 91/47**

(84) Benannte Vertragsstaaten:
**AT BE CH DE DK ES FR GB GR IT LI LU NL SE**

(71) Anmelder: **SIKORA INDUSTRIEELEKTRONIK GMBH**
**Bruchweide 2**
**W-2800 Bremen 44(DE)**

(72) Erfinder: **Sikora, Harald**
**Griesborner Str. 37**
**W-2800 Bremen 44(DE)**

(74) Vertreter: **Dipl.-Ing. H. Hauck, Dipl.-Ing. E. Graalfs, Dipl.-Ing. W. Wehnert, Dr.-Ing. W. Döring**
**Neuer Wall 41**
**W-2000 Hamburg 36(DE)**

(54) **Vorrichtung zur Messung der Lage eines Leiterstrangs eines Kabels im Kabelmantel.**

(57) Vorrichtung zur Messung der Lage eines Leiterstrangs (10) eines Kabels (16) im Kabelmantel (14), vorzugsweise unmittelbar nach der Extrusion des aus Kunststoff bestehenden Mantels (14), bei der mindestens ein Haltebauteil für einen Sensor (42) mit dem Umfang des Mantels (14) in ständiger Anlage ist und der Sensor (42) den Abstand des Leiterstrangs (10) vom Sensor ermittelt, und das Ausgangssignal des Sensors (42) auf eine Auswerte- und Anzeigevorrichtung gegeben wird, wobei das Haltebauteil von einer mit dem Kabel (16) mitlaufenden Rolle (20, 22) gebildet wird, die quer zur Drehachse nachgebend gelagert ist.

FIG.1

EP 0 457 316 A1

Die Erfindung bezieht sich auf eine Vorrichtung zur Messung der Lage eines Leiterstrangs eines Kabels im Kabelmantel.

Bei der Herstellung von Kabeln wird der Kabelmantel normalerweise mit Hilfe eines Extruders auf den Leiterstrang appliziert, dessen Dicke einen vorgegebenen Wert haben soll, beispielsweise um die notwendige Isoliereigenschaft bereitzustellen. Die Überprüfung der Dicke bzw. des Durchmessers des Kabels geschieht z.B. mit optischen Meßgeräten. Eine Lichtquelle, die quer zur Kabelrichtung strahlt, erzeugt auf einer Empfangseinrichtung, beispielsweise auf Diodenzeilen, einen Schatten, dessen Abmessung ein Maß für den Durchmesser ist. Hat dieser nicht den gewünschten Wert, wird etwa die Drehzahl der Extruderschnecke oder die Absolutgeschwindigkeit des Stranges solange verstellt, bis der Sollwert erreicht ist.

Aus Gründen minimalen Materialeinsatzes wird ein Mindestdurchmesser eingestellt. Hat der Leiterstrang indessen im Kabelmantel eine exzentrische Lage, wird die gewünschte Wanddicke gegebenenfalls unterschritten und die erforderliche Isolation nicht mehr erreicht. Es ist daher notwendig, die Exzentrizität des Leiterstrangs zu ermitteln. Wird die Exzentrizität am Ende einer Vernetzungsstrecke gemessen, kommt die Korrektur durch eine entsprechende Verstellung der Extruderwerkzeuge verhältnismäßig spät; eine größere Kabellänge ist dann unter Umständen mit einer nicht zulässigen Exzentrizität behaftet.

Aus der US-PS 4 086 044 ist bekannt geworden, die Exzentrizität mit Hilfe der Induktionsmessung zu ermitteln. Mit Hilfe von induktiven Sensoren wird die Lage des Leiters relativ zu den Sensoren ermittelt; die Sensoren sprechen z.B. auf das Magnetfeld an, das ein im Leiterstrang eingeprägter Strom erzeugt. Mit Hilfe optischer Anordnungen läßt sich die Lage des Kabelmantels bestimmen. Auf diese Weise läßt sich auch die Wanddicke der Ummantelung messen bzw. errechnen. Die Messung der Exzentrizität mit Hilfe von Spulen aufweisenden induktiven Sensoren ist jedoch in einem Druckrohr für die Vernetzung kaum durchführbar. Insbesondere ist eine aufwendige Temperaturkompensation notwendig, um annähernd genaue Werte zu erhalten.

Das beschriebene Verfahren stellt eine berührungslose Messung der Exzentrizität dar. Es sind jedoch auch berührende Verfahren bekannt geworden. Bei einer Ausführungsform des bekannten Verfahrens liegt ein Haltebauteil für einen Sensor am Kabelmantel an. Der Sensor weist einen Schwingungskreis auf, dessen Bedämpfung sich mit dem Abstand des Leiterstrangs ändert. Es ist ferner bekannt geworden, am Kabel zwei gegenüberliegende Platten aus elektrisch leitendem Material angreifen zu lassen und die Kapazität zwischen dem Leiter und den Platten zu messen, wobei eine Kapazitätsdifferenz ungleich Null auf eine Exzentrizität schließen läßt.

Beide bekannten Verfahren sind mit erheblichen Nachteilen behaftet. Das Haltebauteil bzw. die elektrisch leitenden Platten sind stationär, während sich die Kabel mit einer erheblichen Geschwindigkeit vorbewegen können. Kabel von kleinerem Durchmesser werden mit bis zu 2000 m pro Minute durch den Extruder hindurchbewegt. Auf diese Weise entsteht am Meßkopf ein erheblicher Reibungsverschleiß. Ferner findet sehr rasch eine merkliche Verschmutzung statt, die die Meßgenauigkeit beeinträchtigt. Ein weiterer Nachteil der bekannten Meßverfahren ist die Bedingung, daß bei einem anderen Durchmesser des Kabels jeweils eine neue Eichung vorgenommen werden muß. Schließlich können die bekannten Meßverfahren nur bei völlig erkaltetem Kabelmantel verwendet werden. Bei der Kapazitätenmeßmethode kommt als Nachteil hinzu, daß ihre Durchführbarkeit bei feuchtem Kabelmantel leidet oder unmöglich wird.

Der Erfindung liegt daher die Aufgabe zugrunde, eine Vorrichtung zur Messung der Lage eines Leiterstranges eines Kabels im Kabelmantel, vorzugsweise unmittelbar nach der Extrusion, zu schaffen, die trotz der ständigen Berührung mit dem Kabelmantel verschleißarm arbeitet und eine hohe Meßgenauigkeit gewährleistet.

Diese Aufgabe wird durch das Merkmal des Kennzeichnungsteils des Patentanspruchs 1 gelöst.

Bei der erfindungsgemäßen Vorrichtung wird das Haltebauteil für den Sensor von einer mit dem Kabel mitlaufenden Rolle gebildet. Die Rolle ist nachgebend gelagert und wird z.B. mit Hilfe einer Feder oder einer ähnlichen Vorrichtung in ständigem Kontakt mit dem Kabelmantel gehalten, unabhängig von dem Durchmesser des jeweils produzierten Kabels. Der der Rolle zugeordnete Sensor kann nach einer Ausgestaltung der Erfindung relativ zur Rolle stationär angeordnet sein. Die Rolle kann z.B. drehbar auf einer starren Achse angeordnet sein, und der Sensor wird von einem Tragarm an der Achse gehalten in relativ geringem Abstand zum Umfang der Rolle. Der Abstand des Sensors von dem Kabelmantel ist daher konstant und das Ausgangssignal des Sensors mithin ein Maß für den Abstand des Leiterstrangs vom Sensor. Die Auswerte- und Anzeigevorrichtung vergleicht den gemessenen Wert mit einem Sollwert und erzeugt ein Anzeigesignal, wenn eine Differenz vorliegt. Das Vorzeichen der Differenz sagt aus, ob der Abstand zu groß oder zu klein ist.

Nach einer alternativen Ausführungsform der Erfindung kann der Sensor mit der Rolle umlaufen. In diesem Fall ändert sich indessen das Ausgangssignal des Sensors periodisch und muß in Abhängigkeit von der Drehlage der Rolle gebracht werden. So kann beispielsweise das Minimum oder das Maximum des Ausgangssignals benutzt werden als den Abstand zwischen Sensor und Leiterstrang repräsentierendes Arbeitssignal. Ein umlaufender Sensor erfordert indessen eine etwas aufwendigere Übertragung des Ausgangssignals auf die stationäre Auswerte- und Anzeigevorrichtung, beispielsweise über Schleifringe.

Obwohl bei der Erfindung dafür gesorgt ist, daß der Abstand des Sensors von der Oberfläche des Kabels konstant bleibt, ist der Reibungsverschleiß aufgrund der mitlaufenden Rolle als Trägerbauteil für den Sensor minimal. Verschmutzungen spielen eine untergeordnete Rolle und können gegebenenfalls auch einfach beseitigt werden. Die erfindungsgemäße Vorrichtung ermöglicht sogar eine Messung bei noch relativ warmem Material für den Kabelmantel, da der Anpreßdruck der Rolle am Kabel nur so hoch gewählt werden muß, daß die Rolle ohne oder ohne nennenswerten Schlupf einfach mitdreht.

Als Sensoren sind verschiedene Ausführungen denkbar. Eine besteht erfindungsgemäß darin, daß ein induktiver Sensor vorgesehen ist, der vom Magnetfeld beeinflußt wird, das ein durch den Leiterstrang fließender Strom erzeugt. Mit Hilfe einer Stromquelle wird in dem Leiter ein Strom erzeugt, beispielsweise auf induktivem oder kapazitivem Wege oder durch Direktverbindung mit dem blanken Leiterstrang. Der Strom kann hoch- oder höherfrequent sein und im Sensor eine Spannung induzieren, dessen Größe abhängig ist vom Abstand des Sensors vom Leiterstrang. Wird ein induktiver Sensor nach Art eines Näherungssensors verwendet, braucht im Leiterstrang kein Strom erzeugt zu werden. Die Dämpfung des elektromagnetischen Schwingkreises ist abhängig vom Abstand des Leiters vom Näherungssensor. Die Frequenzänderung aufgrund der unterschiedlichen Bedämpfung ist daher ein Maß für den besagten Abstand. Die Auswerte- und Anzeigevorrichtung nimmt daher eine entsprechende Auswertung vor.

Alternativ kann ein kapazitiver Sensor verwendet werden, dessen Feld vom elektrischen Feld beeinflußt wird, das ein durch den Leiterstrang fließender Strom erzeugt. Es versteht sich, daß die Rolle als Haltebauteil für den Sensor aus elektrisch nicht leitendem Material bestehen muß, damit sie das elektromagnetische oder elektrostatische Feld nicht stört.

Eine dritte Möglichkeit, den Abstand des Sensors von dem Leiterstrang festzustellen besteht darin, daß er einen Meßwellen aussendenden Sender aufweist sowie einen die Reflexion der Meßwellen vom Leiterstrang empfangenden Empfänger. Die Auswerte- und Anzeigevorrichtung enthält eine Laufzeitmeßvorrichtung, mit deren Hilfe wiederum der Abstand des Sensors vom Leiterstrang ermittelt werden kann. Sender und Empfänger können z.B. mit Ultraschall arbeiten, wobei nach einer weiteren Ausgestaltung der Erfindung Sender und Empfänger sowie das Kabel in einer Kopplungsflüssigkeit angeordnet sind, um eine günstige Energieübertragung zu erhalten. Es versteht sich, daß auch andere Meßwellen zur Laufzeitmessung verwendet werden können, z.B. elektromagnetische oder andere Longitudinalwellen.

Eine dritte Alternative zur Ausbildung des Sensors besteht nach einer Ausgestaltung der Erfindung darin, daß die Rolle einen Ring aus elektrisch leitendem Material aufweist, in dem ein Strom induziert wird aufgrund eines in dem Leiterstrang eingeprägten Stromes und der Ring von einer stationären Spule umgeben ist oder mit dieser zusammenwirkt, in der eine vom Strom in dem Ring abhängige Spannung induziert wird. Der im leitenden Ring induzierte Strom ist abhängig von der Größe des im Leiterstrang eingeprägten Stromes und von dem Abstand des Ringes vom Leiterstrang. Der in dem leitenden Ring induzierte Strom wird elektromagnetisch ausgekoppelt, und die in der Spule induzierte Spannung ist mithin ein Maß für den gesuchten Abstand des Leiterstrangs. Der Ring läßt sich über eine Achse lagern, oder es werden Stützrollen vorgesehen, die den leitenden Ring nachgebend gegen die Oberfläche des Kabels andrücken.

Wird ein einziger Sensor an einer einzigen Rolle verwendet, läßt sich naturgemäß die Exzentrizität nur entlang einer Linie ermitteln. Um eine genauere Exzentrizitätsmessung vorzunehmen, ist es zweckmäßig, mehrere Rollen, die jeweils mindestens einen Sensor enthalten, mit dem Kabel in Eingriff zu bringen. So können mehrere Rollen sternförmig am Umfang des Kabels angeordnet werden. Damit nicht für jede Rolle eine eigene Auswerte- und Anzeigevorrichtung notwendig wird, kann ein Multiplexer vorgesehen werden, der die Ausgangssignale der Sensoren nacheinander in die Auswerteschaltung eingibt. Nach einer weiteren Ausgestaltung der Erfindung sind mindestens zwei gegenüberliegende, jeweils mindestens einen Sensor enthaltende Rollen vorgesehen, deren Signale miteinander verglichen werden. Ist die Differenz der Ausgangssignale Null, ist auch die Exzentrizität Null. Bei einer Differenz ungleich Null, zeigt das Vorzeichen der Differenz an, zu welcher Seite hin der Leiterstrang im Kabelmantel verschoben ist. Wird in einer weiteren Ausgestaltung der Erfindung eine Verstärkerschaltung vorgesehen, die die Ausgangssignale der Sensoren auf konstante Verstärkung regelt, kann das Differenzsignal zugleich in Längeneinheiten kalibriert werden, um die Exzentrizität z.B. in Millimetern unmittelbar anzuzeigen.

Insbesondere bei Kabeln mit kleinerem Durchmesser kommt es nach dem Extrudieren zu einer mehr oder weniger ausgeprägten Drehung des Kabels um seine Längsachse, die auch oszillierend sein kann. Es ist daher in bezug auf die feststehenden Werkzeuge des Extruders wichtig anzugeben, welcher Umfangsposition die gemessene Exzentrizität entspricht. Daher sieht eine Ausgestaltung der Erfindung vor, daß ein Verdrehmesser die Drehung des Kabels um seine Längsachse mißt und das Ausgangssignal des Verdrehmessers auf die Auswerte- und Anzeigevorrichtung gegeben wird zur Berechnung der Lage des Leiterstrangs in Abhängigkeit von der Drehlage des Kabels. Als Verdrehmesser kann z.B. nach einer weiteren Ausgestaltung der Erfindung eine Zylinderrolle dienen, die entlang ihrer quer zur Kabelachse liegenden Längsachse bewegbar gelagert ist. Ein Wegmesser mißt die Verschiebung der Zylinderrolle von einer Nullposition aus, wobei das Ausmaß der Verschiebung ein Maß für die Verdrehung des Kabels ist.

Wie erwähnt, kann eine einzige Rolle mit einem einzigen Sensor die Exzentrizität nur entlang einer Linie messen. Eine Verdrehung des Kabels ermöglicht eine Messung entlang einer schraubenlinienförmigen Linie, wodurch eine bessere Aussage über die Lage des Leiterstrangs im Kabelmantel insgesamt erhalten werden kann. Das beschriebene Auftreten der Kabelverdrehung ist jedoch völlig willkürlich und kann daher nicht zur gezielten Verbesserung der Aussagefähigkeit der Meßwerte herangezogen werden. Statt dessen sieht eine Ausgestaltung der Erfindung vor, daß mindestens eine Zylinderrolle am Kabel anliegt, deren Achse quer zur Kabelachse verläuft. Mit der Zylinderrolle ist eine Antriebsvorrichtung verbunden, die die Rolle periodisch hin- und herbewegt. Werden z.B. zwei gegenüberliegende Zylinderrollen verwendet, kann das Kabel zyklisch verdreht werden. Auf diese Weise läßt sich schraubenlinienförmig eine Exzentritätsmessung über den gesamten Umfang des Kabels vornehmen. Eine Verdrehung des Kabels relativ zur den Sensor aufweisenden Rolle führt zu einer Reibung an der Rolle. Auch bei sehr hohen Abzugsgeschwindigkeiten des Kabels ist die relative Umfangsgeschwindigkeit in Reibungsrichtung verhältnismäßig gering und kann letztlich vernachlässigt werden.

Die Erfindung wird nachfolgend anhand von Zeichnungen näher erläutert.

Fig. 1 zeigt schematisch eine Vorrichtung nach der Erfindung.

Fig. 2 zeigt schematisch eine alternative Ausführungsform für einen Sensor der Vorrichtung nach Fig. 1.

Fig. 3 zeigt schematisch eine Vorrichtung zur Verdrehmessung eines Kabel für eine Vorrichtung nach Fig. 1.

Fig. 4 zeigt einen Schnitt durch die Vorrichtung nach Fig. 1 entlang der Linie 4-4.

Fig. 5 zeigt schematisch eine Verdrehvorrichtung für die Verdrehung eines zu messenden Kabels.

Ein Leiterstrang 10, etwa in Form eines einzelnen Drahtes, einer Litze, Geflechts oder dergleichen wird in einem Extruder 12 auf eine im einzelnen nicht dargestellt Weise mit einem Mantel 14 versehen. Das auf diese Weise gebildete Kabel 16 wird in Richtung des Pfeils 18 mit einer vorgegebenen Geschwindigkeit abgezogen und anschließend in einer Kühlstrecke abgekühlt, bevor es auf einer Rolle aufgewickelt wird. Es besteht naturgemäß das Bestreben, den Mantel 14 so auf den Leiter 10 zu extrudieren, daß der Leiter 10 konzentrisch im Mantel 14 angeordnet ist und die Dicke des Mantels einen vorgegebenen Wert erreicht. Die Dicke des Mantels bzw. der Durchmesser wird z.B. mit Hilfe einer optischen Meßvorrichtung überwacht. Bei einer Abweichung von der Sollgröße wird die Abzugsgeschwindigkeit und/oder die Fördergeschwindigkeit der Extruderschnecke verändert. Die gezeigte Vorrichtung mißt die Relativlage des Leiters im Mantel, die auch bei entsprechender Einstellung der Extruderwerkzeuge nicht immer konzentrisch ist.

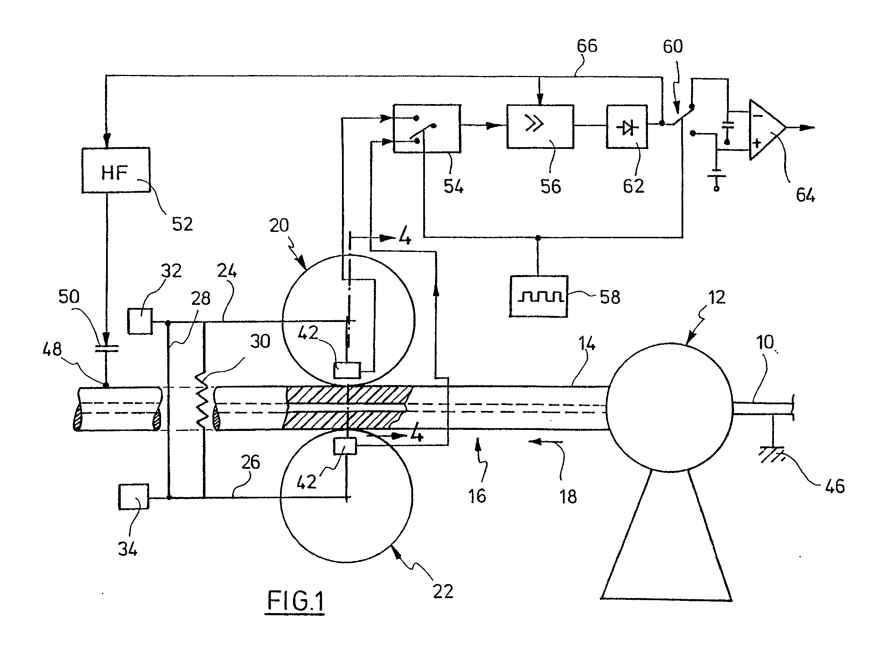

In Fig. 1 sind zwei Rollen 20, 22 zu erkennen, deren Achse senkrecht zur Kabelachse verläuft und die mit ihrem Umfang an gegenüberliegenden Seiten am Kabel 16 angreifen. Die Rollen 20, 22 sind an Armen 24 bzw. 26 drehbar gelagert, die an einer Querstrebe 28 angelenkt sind. Die Arme 24, 26 sind von einer Feder 30 gegeneinander vorgespannt, um den Rollen 20, 22 einen bestimmten Anpreßdruck zu erteilen. Über die Anlenkung einer Querstrebe 28 hinausstehende Abschnitte der Arme 24, 26 halten Gewichte 32 bzw. 34. Die Gewichte 32, 34 dienen zum Ausgleich des Schwergewichts von Rollen 20, 22 und Armen 24, 26. Liegen die Rollen 20, 22 horizontal, kann ein Gewichtsausgleich entfallen.

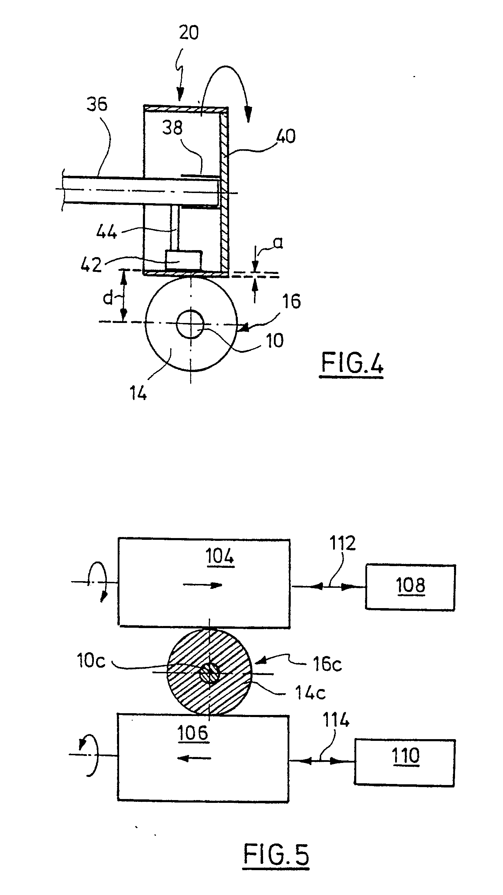

Aus Fig. 4 geht schematisch der Aufbau der Rolle 20 hervor. Eine feststehende Achse 36, die mit einem nicht gezeigten Gestell verbunden ist, lagert eine an der Innenseite der Stirnwand 40 angebrachte Lagerhülse 38, beispielsweise mit Hilfe geeigneter Rollenlager. Die mithin hohle Rolle 20 dreht sich bei einer Bewegung des Kabels 16 mit. An der Achse 36 ist ein Sensor 42 stationär angebracht mit Hilfe eines Arms 44. Bei einer Anlage der Rolle 20 am Kabel 16 ist daher der Abstand des Sensors 42 von der Oberfläche des Kabels 16 konstant. Er ist in Fig. 4 mit a bezeichnet. Der Abstand d des Sensors 42 von der Achse des Leiters 10 hängt somit von der Dicke des Kabelmantels 14 ab.

Der Aufbau der Sensoren 42 ist im einzelnen nicht dargestellt. Beispielsweise können sie eine Induktionsspule enthalten, in der eine Spannung induziert werden kann. Dies kann z.B. dadurch geschehen, daß in dem Leiter 10 ein hochfrequenter Strom eingeprägt wird. Der Leiter 10 befindet sich, bevor er in den Extruder 12 gelangt, ohnehin an Masse, wie bei 46 dargestellt. Eine Elektrode 48, die über einen Kondensator 50 an einen Hochfrequenzgenerator 52 angeschlossen ist, befindet sich an oder nahe der Oberfläche des Kabelmantels 14. Der in dem Leiter 10 fließende hochfrequente Strom induziert eine Spannung in den Spulen der Sensoren 42. Es versteht sich, daß auch auf den eingeprägten Strom verzichtet werden kann, wenn die Sensoren als Näherungsfühler ausgebildet sind, deren Bedämpfung abhängig ist von dem Abstand des Näherungssensors zum Leiter 10.

Die Ausgangssignale beider Sensoren 42 werden über getrennte Leitungen auf einen elektronischen Schalter 54 gegeben, der die Ausgänge der Sensoren 42 abwechselnd auf einen Verstärker 56 gibt. Die Steuerung des Schalters 54 erfolgt mit Hilfe eines Signalgebers 58, der außerdem einen weiteren elektronischen Schalter 60 steuert, der den Ausgang einer Gleichrichterschaltung 62 am Ausgang des Verstärkers 56 abwechselnd auf einen Eingang eines Operationsverstärkers 64 gibt. Der Verstärker 64 arbeitet als Differenzverstärker für die Ausgangssignale der Sensoren 42. Ist das Ausgangssignal des Verstärkers 64 Null, befindet sich der Leiter 10 genau in der Mitte zwischen den Sensoren 42 und damit auch konzentrisch im Kabel 16, zumindest in der durch die Sensoren 42 aufgespannten Ebene durch das Kabel 16. Ist das Ausgangssignal des Verstärkers 64 ungleich Null, stellt seine Größe ein Maß für die Abweichung der Lage des Leiters 10 dar und sein Vorzeichen zeigt die Verlagerung zum einen der beiden Sensoren hin an.

Das Ausgangssignal der Gleichrichterschaltung 62 wird über die Leitung 66 auf den Verstärker 56 und den Hochfrequenzgeneratur 52 rückgekoppelt. Auf diese Weise wird eine automatische Verstärkungsregelung erhalten, welche erlaubt, das Ausgangssignal des Verstärkers 64 auf eine Längeneinheit zu eichen, so daß das Ausgangssignal unabhängig von der Dicke des Kabels die Exzentrizität zum Beispiel in Form von Millimetern anzeigt. Die eigentliche Anzeigevorrichtung ist nicht dargestellt. Sie kann eine optische Anzeigevorrichtung sein, welche die Exzentrizität zum Beispiel digital anzeigt.

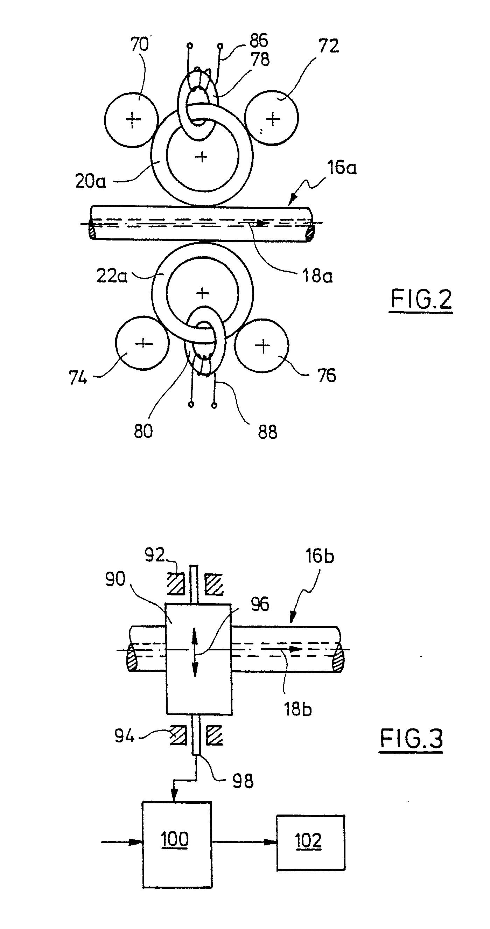

In Fig. 2 wird ein Kabel 16a in Richtung des Pfeils 18a vorbewegt. Zwei Ringe 20a, 22a aus elektrisch leitendem Material sind rollend mit dem Kabel 16 auf gegenüberliegenden Seiten in Eingriff. Die Ringe 20a, 22a werden mit Hilfe von Stützrollenpaaren 70, 72 bzw. 74, 76 gegen die Oberfläche des Kabels 16 gehalten. Die Stützrollen 70 bis 76 sind nachgebend gelagert, so daß auch die Ringe 20a, 22a bei einem anderen Durchmesser bzw. bei Unregelmäßigkeiten des Durchmessers des Kabels 16 nachgeben können. Durch die Ringe 20a, 22a sind Ringkerne 78 bzw. 80 gezogen, die außerhalb der Ringe 20a, 22a mit einer Spule 86 bzw. 88 gekoppelt sind. Im Leiter des Kabels 16 wird auf oben beschriebene oder auf andere Weise ein Wechselstrom eingeprägt, dessen Feld in den Ringen 20a, 22a einen Strom induziert. Die Stärke des Stromes ist abhängig von der Stärke des Stroms im Leiter sowie vom Abstand des Ringes 20a bzw. 22a vom Leiter. Die in der Spule 82 bzw. 84 induzierte Spannung ist mithin ein Maß für den Abstand der Ringe 20a, 22a vom Leiter. Sie kann in gleicher Weise in einer Auswerteschaltung verarbeitet werden, wie dies in Verbindung mit Fig. 1 beschrieben worden ist.

Falls die Ringe 20a, 22a mittels Achsen drehbar gelagert werden, werden offene, U-förmige Kerne verwendet, um den im Ring 20a, 22a induzierten Strom zu messen.

In Fig. 3 ist ein Kabel 16b dargestellt, das in Richtung des Pfeils 18b vorbewegt wird. Eine Zylinderrolle 90, deren Achse senkrecht zur Kabelachse verläuft, ist in Lagern 92 bzw. 94 verschiebbar und drehbar gelagert. Die Verschiebbarkeit wird durch den Doppelpfeil 96 angedeutet. Bei einer einfachen Vorbewegung des Kabels 16b bewegt sich die Rolle 90 ausschließlich in Drehrichtung. Wird dem Kabel 16b auch eine Drehung erteilt, kommt es zu einer entsprechenden Verschiebung der Zylinderrolle 90. Die Verschiebung wird, wie schematisch bei 98 angedeutet, erfaßt und in die Auswertevorrichtung 100 eingegeben. Die Auswerteeinrichtung 100 enthält zum Beispiel das Ausgangssignal des Differenzverstärkers 64 nach Fig. 1. Die Auswertevorrichtung 100 ist mit einer nicht weiter im einzelnen dargestellten Anzeigevorrichtung 102 verbunden. Die Messung der Exzentrizität erfolgt daher bei einer Meßvorrichtung mit Hilfe der zusätzlichen Einrichtung nach Fig. 3 in Abhängigkeit von der Drehlage des Kabels 16b.

In Fig. 5 ist ein Kabel 12c dargestellt, das einen Kabelmantel 14c und einen Leiter 10c aufweist. Die Vorbewegung des Kabels 12c erfolgt senkrecht zur Zeichenebene. An diametral gegenüberliegenden Seiten sind Zylinderrollen 104, 106 angeordnet, deren Achse senkrecht zur Kabelachse verläuft. Die Zylinderrollen 104, 106 drehen sich bei der Vorbewegung des Kabels 12. Sie sind jedoch mit Antriebsvorrichtungen 108, 110 verbunden, welche die Zylinderrollen 104, 106 entlang ihrer Längsachse hin- und herbewegen, wie durch Doppelpfeil 112 bzw. 114 angedeutet. Dadurch kann dem Kabel 16c eine gezielte Drehung erteilt werden, so daß zum Beispiel Sensoren nach Fig. 1 eine Messung der Exzentrizität schraubenlinienförmig über den Umfang des Kabels vornehmen können und nicht nur entlang einer geraden Linie. Dadurch kann zum Beispiel die Notwendigkeit entfallen, mehr als zwei Sensoren, etwa nach Fig. 1, sternförmig um den Umfang des Kabels anzuordnen, um eine größere Meßgenauigkeit zu erzielen.

## Patentansprüche

1. Vorrichtung zur Messung der Lage eines Leiterstrangs eines Kabels im Kabelmantel, vorzugsweise unmittelbar nach der Extrusion des aus Kunststoff bestehenden Mantels, bei der mindestens ein Haltebauteil für einen Sensor mit dem Umfang des Mantels in ständiger Anlage ist und der Sensor den Abstand des Leiterstrangs vom Sensor ermittelt, und das Ausgangssignal des Sensors auf eine Auswerte- und Anzeigevorrichtung gegeben wird, dadurch gekennzeichnet, daß das Haltebauteil von einer mit dem Kabel (16, 16a) mitlaufenden Rolle (20, 22; 20a, 22a) gebildet wird, die quer zur Drehachse nachgebend gelagert ist.

2. Vorrichtung nach Anspruch 1, dadurch gekennzeichnet,daß der Sensor mit der Rolle umläuft und die Auswerte- und Anzeigevorrichtung das Ausgangssignal des Sensors in Abhängigkeit von der Drehlage der Rolle verarbeitet.

3. Vorrichtung nach Anspruch 2, dadurch gekennzeichnet,daß die Auswerte- und Anzeigevorrichtung das Minimum bzw. das Maximum des Ausgangssignals verarbeitet.

4. Vorrichtung nach Anspruch 1, dadurch gekennzeichnet,daß der Sensor (42) relativ zur Rolle (20, 22) stationär ist.

5. Vorrichtung nach einem der Ansprüche 1 bis 4, dadurch gekennzeichnet, daß der Sensor (20, 22) ein induktiver Sensor ist, der vom Magnetfeld beeinflußt wird, das ein durch den Leiterstrang (10) fließender Strom erzeugt.

6. Vorrichtung nach einem der Ansprüche 1 bis 4, dadurch gekennzeichnet, daß der Sensor ein kapazitiver Sensor ist, der vom elektrischen Feld beeinflußt wird, das ein durch den Leiterstrang fließender Strom erzeugt.

7. Vorrichtung nach einem der Ansprüche 1 bis 4, dadurch gekennzeichnet, daß der Sensor einen Meßwellen aussendenden Sender aufweist sowie einen die Reflexion der Meßwellen vom Leiterstrang empfangenden Empfänger und die Auswerte- und Anzeigevorrichtung eine Laufzeitmeßvorrichtung enthält.

8. Vorrichtung nach Anspruch 7, dadurch gekennzeichnet,daß Sender und Empfänger mit Ultraschall arbeiten und zusammen mit dem Kabel in einer Kopplungsflüssigkeit angeordnet sind.

9. Vorrichtung nach einem der Ansprüche 1 bis 4, dadurch gekennzeichnet, daß die Rolle einen Ring (20a, 22a) aus magnetisch wirkendem Material aufweist, in dem ein Strom induziert wird aufgrund eines in dem Leiterstrang eingeprägten Stroms und der Ring (20a, 22a) mit einem magnetischen Kern einer stationären Spule (86, 88) zusammenwirkt, in der eine vom Strom in dem Ring abhängige Spannung induziert wird.

10. Vorrichtung nach einem der Ansprüche 1 bis 9, dadurch gekennzeichnet, daß ein Verdrehmesser (90, 98) die Drehung des Kabels (16b) um seine Längsachse mißt und das Ausgangssignal des Verdrehmessers auf die Auswerte- und Anzeigevorrichtung (100) gegeben wird zur Berechnung der Lage des Leiterstrangs in Abhängigkeit von der Drehlage des Kabels (16b).

11. Vorrichtung nach Anspruch 10, dadurch gekennzeichnet, daß an dem Kabel (16b) eine Zylinderrolle (90) anliegt, die entlang ihrer quer zur Kabelachse liegenden Längsachse bewegbar gelagert ist und ein Wegmesser (98) die Verschiebung der Zylinderrolle (90) von einer Nullposition aus ermittelt.

12. Vorrichtung nach Anspruch 10, dadurch gekennzeichnet, daß mindestens eine Zylinderrolle (104, 106) am Kabel (16c) anliegt, deren Achse quer zur Kabelachse verläuft und mit der Zylinderrolle eine Antriebsvorrichtung (108, 110) verbunden ist, die der Rolle (104,106) eine periodische Hin- und Herbewegung erteilt.

13. Vorrichtung nach einem der Ansprüche 1 bis 12, dadurch gekennzeichnet, daß mindestens zwei jeweils mindestens einen Sensor (42) enthaltende Rollen (20, 22) vorgesehen sind.

14. Vorrichtung nach Anspruch 13, dadurch gekennzeichnet, daß die Auswerte- und Anzeigevorrichtung eine Verstärkungsschaltung enthält, die die Ausgangssignale der Sensoren (42) auf konstante Verstärkung regelt sowie eine Differenzschaltung (64), welche die Differenz der Ausgangssignale bildet.

FIG.1

FIG.2

FIG.3

FIG.4

FIG.5

| | EINSCHLÄGIGE DOKUMENTE | | EP 91107934.1 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁴) |
| X | GB - A - 952 106 (BRITISH INSULATED) * Gesamt; insbes. Seite 3, Zeilen 3-115; Fig. 2,3 * | 1,4 | G 01 B 7/06 |
| A | | 5 | |
| A | GB - A - 2 021 786 (SOFISA) * Gesamt; insbes. Zusammenfassung; Seite 2, Zeilen 10-108; Fig. 1,2 * | 1,2,6 | |
| A | US - A - 4 539 847 (PAAP) * Zusammenfassung; Fig. 8 * | 1,7,8 | |
| A | DE - A1 - 3 136 150 (MANNESMANN) *· Gesamt * | 1,7,8 | |
| A | EP - A1 - 0 206 296 (SIEMENS) * Gesamt; insbes. Spalte 2, Zeile 46 - Spalte 3, Zeile 6; Fig. 4 * | 1,7,8 | RECHERCHIERTE SACHGEBIETE (Int. Cl.⁴) |
| A | US - A - 4 692 700 (NIX) * Gesamt * | | G 01 B 5/00 G 01 B 7/00 G 01 B 17/00 G 01 B 21/00 |
| A | DE - B - 1 966 060 (ZUMBACH) * Gesamt * | 1 | |

Der vorliegende Recherchenbericht wurde fur alle Patentanspruche erstellt.

| Rechercnenort WIEN | Abschlußdatum der Recherche 14-08-1991 | Prüfer TOMASELLI |
|---|---|---|

KATEGORIE DER GENANNTEN DOKUMENTEN
X : von besonderer Bedeutung allein betrachtet
Y : von besonderer Bedeutung in Verbindung mit einer anderen Veroffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veroffentlicht worden ist
D : in der Anmeldung angefuhrtes Dokument
L : aus andern Gründen angeführtes Dokument

& : Mitglied der gleichen Patentfamilie, übereinstimmendes Dokument

EPA Form 1503 03 82